# EUROPEAN PATENT SPECIFICATION

(11) **EP 3 537 938 B1**
(45) Date of publication and mention of the grant of the patent: **19.05.2021**
(21) Application number: 17803806.3
(22) Date of filing: 01.11.2017
(51) Int. Cl.: A47J 19/02, A23N 1/02

(54) **AN IMPROVED JUICER**
VERBESSERTER ENTSAFTER
CENTRIFUGEUSE AMÉLIORÉE

(30) Priority: 08.11.2016 EP 16197772
(43) Date of publication of application: 18.09.2019
(73) Proprietor: Koninklijke Philips N.V., 5656 AG Eindhoven (NL)
(72) Inventor: HOLZBAUER, Juergen, 5656 AE Eindhoven (NL)
(74) Representative: Philips Intellectual Property & Standards
(86) International application number: PCT/EP2017/077933
(87) International publication number: WO 2018/086970

(56) References cited:
- EP-A1- 2 777 448
- EP-A1- 2 859 818
- WO-A1-2015/185582

## Description

### FIELD OF THE INVENTION

The present invention relates to a juicer for extracting liquids from fruits and/or vegetables and more specifically the invention relates to the adjustment of pulp content of the juice.

### BACKGROUND OF THE INVENTION

Commercially available juices can be purchased in different varieties, most notably clear juices and cloudy juices. In cloudy juices, some of the solid matter of the food product, such as food fibers, is suspended in the juice to give the juice a more substantial texture. Such solid matter is commonly referred to as food pulp or simply pulp. Different consumers may prefer different types of juice; some consumers may not like to have 'bits', i.e. pulp, in their juice and therefore prefer a smooth, clear juice whereas other consumers may prefer the presence of such pulp and will therefore prefer cloudy juices.

Patent application EP2859818A1 discloses a juicer comprising a cutter disk with an annular flange provided with a plurality of filter holes that act as outlets for pulp. A collar is arranged below the cutter disk. The collar can be moved up and down by an elevator assembly, so as to partly or completely seal the filters holes, thus adjusting the amount of pulp exiting said holes.

Patent application US2013/0312623 discloses a fiber flow controlled centrifugal bowl mechanism. The centrifugal bowl and the mesh filter bracket of the juicer can rotate to adjust the size of the mesh holes to open extra large holes, thereby fulfilling the aim of adjusting the flow of fibers passing through the mesh holes. The control mechanism is complex and more number of adjustment steps are required. Further, no clear juice can be experienced as the juice so obtained has fiber content in it and big pieces of pulp can pass into the juice because of extra large holes. Fibres could easily get stuck between overlapping edges and it is difficult to clean.

It is an object of the invention to provide a juicer with a simple pulp content adjustment mechanism that allows an user to easily adjust the pulp content in the juice.

### SUMMARY OF THE INVENTION

The object of the invention is realized by providing a juicer according to claim 1.

The main functional parts of a centrifugal juicer are the food shredding element (e.g., shredding plate) combined with the sieve. The fruit gets shredded into small pieces at the shredding element. These shredded small pieces are accelerated and later centrifuged by the high rotation speed of the shredding element. These shredded small pieces (i.e., pulp juice mixture) then hit the sieve. The sieve separates the pulp from the juice. The hole size of the sieve determines the pulp content in the juice.

The pulp content can be influenced, when the shredded small pieces (i.e., pulp juice mixture) are ejected to different areas of the sieve, where different size holes are present. In order to achieve this, the sieve is split into a first portion and a second portion. The first portion is provided with a plurality of mesh holes with a first hole size. The second portion is provided with a plurality of mesh holes with a second hole size.

An adjustment mechanism is provided to control the ejection of the shredded food pieces (i.e., pulp juice mixture) to hit different areas of the sieve. This adjustment mechanism is implemented as a sieve coupler associated with the spoiler. The adjustment mechanism provides an easy and convenient means to control the redirection of the shredded food pieces (i.e., pulp juice mixture) into different areas of the sieve. By appropriately controlling the relative position of the spoiler and the food shredding element, the shredded food pieces could be suitably controlled such that the shredded food pieces can pass through the first portion of the sieve provided with a plurality of mesh holes with a first hole size or through the second portion of the sieve provided with a plurality of mesh holes with a second hole size. By a simple movement operation of the spoiler, the shredded food pieces could be redirected towards the first portion having mesh holes with the first hole size or towards the second portion having mesh holes with the second hole size.

Depending on the position of the spoiler and the food shredding element, the shredded food pieces could be directed to different portions of the sieve. The different portions of the sieve are equipped with openings of different hole size. Depending on where the shredded food pieces (i.e., pulp juice mixture) hits, more or less pulp will be able to escape to the juice collection chamber. In essence, the spoiler and the food shredding element are adjustable relative to each other to direct the flow of the shredded food pieces to specific sections of the sieve.

This is a cost effective cost solution. The sieve needs to be split into two portions and each portion has to be provided with a plurality of mesh holes with different hole sizes. In addition, a position adjustment element is to be provided to direct the shredded food pieces to fall on different areas on the sieve.

The mesh holes in the sieve are dimensioned such that the shredded food pieces are forced through different mesh holes at different positions of the spoiler and the food shredding element. The crux of the invention is the combination of spoiler and the moveable thereby height adjustable food shredding element and the sieve hole sizes that enables differences in pulp in the juice. The operation is easy, simple and convenient.

The pulp content adjustment mechanism disclosed in US 2013/0312623A1 is complex and more number of adjustment positions are needed. The present invention provides an easy and simple mechanism for the user to adjust the pulp content of the juice. The user can decide whether the juice should be clear or pulpy by appropriately switching the spoiler setting.

In order to adjust the pulp content in the juicer, it is essential that
a) there is a clear juice position e.g., position one for consumers who prefer clear juice
b) there is a cloudy juice position e.g., position two for consumers who prefer cloudy juice
c) there is a clear difference between position one and position two
d) the pulp content does not get too much
e) there are not too big fibers in the juice

The disclosed solution meets all the above mentioned essential aspects. The disclosed solution is very precise in pulp adjustment: clear juice in position one and nice cloudy juice in position two. The disclosed solution provides precise clear juice and cloudy juice settings that could satisfy many consumers. Further, it is easy to clean the centrifugal bowl.

The solution disclosed in US 2013/0312623A1 has the following disadvantages:
a) number of adjustment positions are more (3 steps)
b) number of operations required are more
c) threshold of pulp/fiber content is high and hence results in juice that has high pulp/fiber content in all the positions and relatively too much pulp/fiber content in the open hole position
d) no clear juice can be experienced
e) complex design and it is difficult to clean

The difference between the adjustment steps 1, 2, and 3 is small in the prior art solution disclosed in US2013/0312623A1 and the juice produced in each of these steps have relatively high pulp/fiber content. The difference between the adjustment steps is ineffective because no clear juice can be produced. On the other hand, the present invention provides precise adjustment for clear juice and cloudy juice. The adjustability function is superior and results in better functional performance with regard to the pulp/fiber content threshold in the juice.

An experiment was conducted to test the functional performance of the disclosed solution with regard to the pulp/fiber content threshold in the juice. Five different fruits namely carrot, apple, tomato, grapes and oranges were used for the experiment. The experimental results showed that there is a clear difference in juices for setting one and setting two. The juice in setting one is clear. The juice in setting two has got more fibers, but tastes smooth as there are only fine fibers in the juice.

The present invention achieves precise adjustment and consumers can experience real clear juice with minimal pulp/fiber content. Further, the disclosed solution is easy to clean and no extra steps are needed. The present invention allows the customer to still experience clear juice in step 1 compared to the prior art solution.

In the prior art solution, all the settings have very similar taste and rather big chunks can pass the big holes (3- 5 mm) that can be opened by the prior art solution. On the other hand, with the present invention the size of the fibers is limited with the sieve hole diameter (0.4 - 1mm) and the juice tastes very smooth (like a smoothie). Further, the cleaning is more cumbersome with the prior art solution. There will be some pulp in the lower area of the sieve if the adjustable part is not removed.

In an embodiment, the adjustment mechanism is implemented as a ring associated with a lever that can be altered, turned, lifted between a first position and a second position. This embodiment provides easy implementation of the adjustment mechanism. A simple operation can control the pulp content in the juice and produce clear juice or cloudy juice. There are only two positions namely position one and position two and hence the number of operations required are minimal.

The lever could be realized as a thread. Alternately, in other embodiments the adjustment mechanism could be implemented e.g., as bayonet catch. In some embodiments, the adjustment mechanism could be operated from outside of the device e.g., via an electromagnetic mechanism.

In a still further embodiment the spoiler is adjustable by rotation along a thread or lifted vertically along rails.

In a still further embodiment, in operation, the ring associated with the lever in the first position directs the flow of the shredded food pulp to pass through the plurality of mesh holes in the first portion having a first hole size. The first hole size could be dimensioned such that the hole size is relatively big. It is easy for the pulp content to pass through the plurality of mesh holes in the first portion. In cloudy juices, some of the solid matter of the food product, such as food fibers, is suspended in the juice to give the juice a more substantial texture. Some consumers may like to have 'bits' i.e., pulp, in their juice and therefore prefer cloudy juice. This embodiment provides a convenient means for the consumer to appropriately adjust the ring position and select the cloudy juice option.

In a still further embodiment, in operation, the ring associated with the lever in the second position directs the flow of the shredded food pulp to pass through the plurality of mesh holes in the second portion having a second hole size. The second hole size could be dimensioned such that the hole size is relatively small. The pulp content cannot easily pass through the plurality of mesh holes in the second portion. Some consumers may not like to have bits i.e., pulp in their juice. This embodiment provides a convenient means for the consumer to appropriately adjust the ring position and select the clear juice option.

In a still further embodiment, the first hole size could have a diameter in the range of 0.20 - 0.35 mm.

In a still further embodiment, the second hole size could have a diameter in the range of 0.40 - 1.5 mm.

In a still further embodiment, the sieve is a frusto conical sieve, the upper sieve diameter being smaller than the lower sieve diameter.

In a still further embodiment, the juicer comprises a juice collector cooperating with the sieve such that juice passing through the plurality of mesh holes with a first hole size or through the plurality of mesh holes with a second hole size is collected in the juice collector. This embodiment enables easy collection of the juice.

In a still further embodiment, the plurality of mesh holes disposed on the first portion and the second portion are configured such that the diameter of the first hole size is different for different mesh holes and the diameter of the second hole size is different for different mesh holes.

The sieve could be provided with mesh holes in the first portion wherein different mesh holes have different first hole size e.g., some mesh holes of 0.22 mm, some mesh holes of 0.28 mm, and some mesh holes of 0.35 mm etc. Similarly, the sieve could be provided with mesh holes in the second portion wherein different mesh holes have different second hole size e.g., some mesh holes of 0.45 mm, some mesh holes of 0.85 mm and some holes of 1.35 mm. This could allow greater control over the pulp content in the cloudy juice/clear juice to be produced by the juicer.

### BRIEF DESCRIPTION OF THE DRAWINGS

The above-mentioned aspects, features and advantages will be further described, by way of example only, with reference to the accompanying drawings, in which the same reference numerals indicate identical or similar parts, and in which:
Fig. 1 illustrates an exemplary schematic juicer according to an embodiment of the subject matter;
Fig. 2 and Fig. 2a illustrates an exemplary sieve arrangement for an exemplary juicer according to an embodiment of the present subject matter;
Fig. 3 schematically represents an exemplary solution for the sieve coupling; and
Fig. 4 shows experimental results depicting the pulp content threshold;

### DETAILED DESCRIPTION OF THE EMBODIMENTS

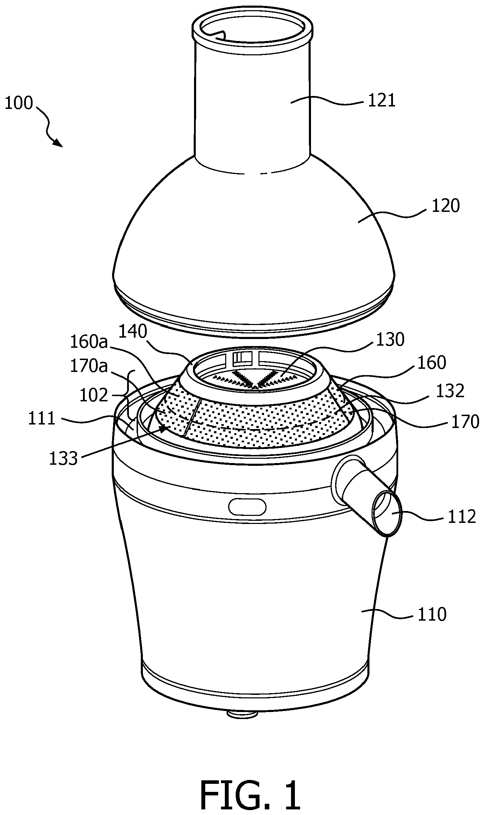

Fig 1 schematically shows an exemplary juicer 100 according to an embodiment. The juicer 100 comprises:
1. a body 110
2. a juice collector 111 forming part of a chamber of the body 110 for receiving a unit
3. a centrifugal bowl 102 having a food shredding element 130 and a sieve 132 having a plurality of mesh holes; the unit indicates that the food shredding element 130 and the sieve 132 cooperate as a unit. It does not necessarily mean that the food shredding element 132 forms an integaral part of the sieve 132; it is equally feasible that the food shredding element 130 and the sieve 132 are separate elements that cooperate to form the unit
4. a spout 112
5. a lid 120
6. a feeding tube 121
7. first portion 160 of the sieve 132
8. second portion 170 of the sieve 132
9. a plurality of mesh holes disposed on the first portion 160 with a first hole size 160a
10.a plurality of mesh holes disposed on the second portion 170 with a second hole size 170a

The sieve 132 may be shaped as a conical frustum as shown in Fig. 1 by way of non-limiting example, in which the sieve 132 tapers outwardly in the direction from the lid 120 towards the body 110, although any other suitable shape may also be contemplated, e.g. a conical sieve 132 tapering outwardly in the direction from the body 110 towards the lid 120, a cylindrical sieve 132 or the like e.g. frustoconical downwards, frusto conical upwards, cylindrical drum. When correctly inserted into the receiving chamber of the body 110, the unit is cooperatively coupled to an electric motor (not shown) inside the body 110 for rotating the unit at a certain speed.

The juicer 100 may further comprise an optional cover or lid 120, which cover may include a feeding tube 121 for feeding food ingredients onto the food shredding element 130. A pusher (not shown) for insertion into the feeding tube 121 may also be provided for pushing the food ingredients through the feeding tube 121 towards the food shredding element 130. Alternatively, the lid 120 may be omitted in which case a user may place the food ingredients directly onto the food shredding element 130, as for instance is the case in juicers having a star-shaped conical shredding element centered in a sieve.

In operation, the electric motor of the juicer 100 rotates the unit including the food shredding element 130 and the sieve 132 at a certain speed. The food ingredients gets shredded into small pieces at the food shredding element 130. These shredded small pieces are accelerated and centrifuged by the high rotation speed of the food shredding element 130. At the sieve, the centrifugal force forces the shredded small pieces (i.e., pulp juice mixture) to escape through the holes onto the inner walls of the lid 120, where the juice runs off into the juice collector 111. The pulp could be fed into a separate pulp collector (not shown) underneath the sieve 132, and can be removed therefrom upon completion of the juicing process as is well-known per se.

The thus collected juice could be fed into a receptacle (not shown) through spout 112, which may have any suitable shape. Alternatively, the spout 112 may be omitted, such that the juice may be poured from the juice collector 111 upon its removal from the body 110 upon completion of the juicing process. Other suitable arrangements will be immediately apparent to the skilled person.

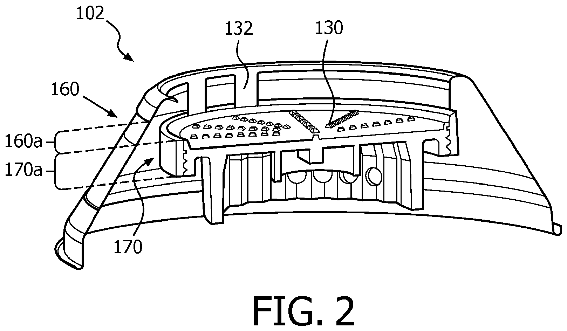

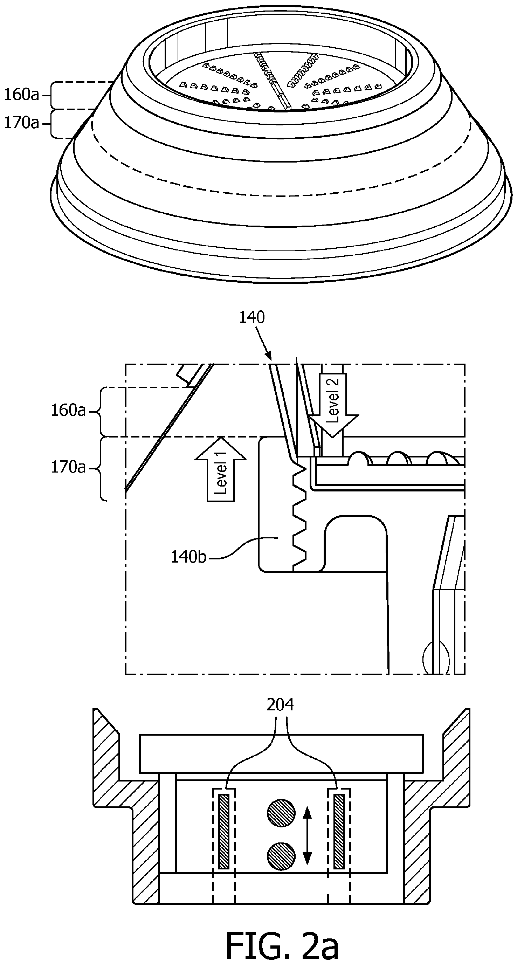

Referring now to Fig. 2, it has been realized by the inventors that the pulp content can be influenced, when the shredded small pieces (pulp juice mixture) are ejected to different areas of the sieve 132, where different size holes are present. In order to achieve this, the sieve 132 is split into a first portion 160 and a second portion 170. The first portion is provided with a plurality of mesh holes with a first hole size 160a. The second portion is provided with a plurality of mesh holes with a second hole size 170a.

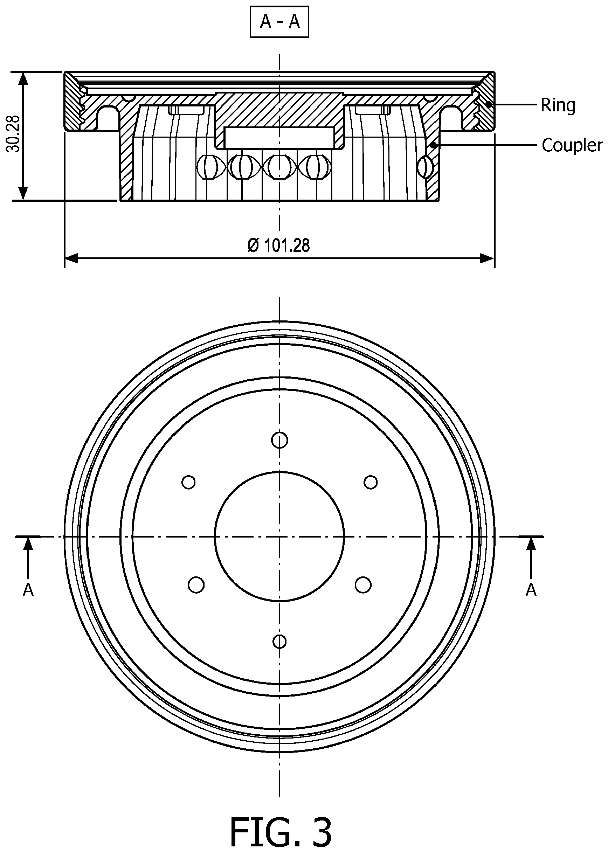

Referring now to Fig. 2a and Fig. 3, the sieve arrangement comprises
1. a sieve coupler 140 coupled to the centrifugal bowl
2. a spoiler 140b associated with the sieve coupler 140
3. an adjustment mechanism cooperating with the sieve coupler 140

The adjustment mechanism could be used to control the ejection of the shredded food pieces (i.e., pulp juice mixture) to hit different areas of the sieve. This adjustment mechanism is implemented as a sieve coupler 140 associated with the spoiler. The adjustment mechanism provides an easy and convenient means to control the redirection of the shredded food pieces (i.e., pulp juice mixture) into different areas of the sieve 132. By appropriately controlling the position of the spoiler and the food shredding element, the shredded food pieces could be suitably controlled such that the shredded food pieces can pass through the first portion of the sieve 160 provided with a plurality of mesh holes with a first hole size 160a or through the second portion of the sieve 170 provided with a plurality of mesh holes with a second hole size 170a. By a simple turn or lift up operation of the spoiler, the shredded food pieces could be redirected towards the first portion having mesh holes with the first hole size or towards the second portion having mesh holes with the second hole size.

Depending on the position of the spoiler 140b and the food shredding element, the shredded food pieces could be directed to different portions of the sieve. The different portions of the sieve are provided with openings of different hole size. Depending on where the shredded food pieces (i.e., pulp juice mixture) hits, more or less pulp will be able to escape to the juice collection chamber. In essence, the spoiler and the food shredding element are adjustable relative to each other to direct the flow of the shredded food pieces to specific sections of the sieve.

This is a cost effective solution. The sieve needs to be split into two portions and each portion has to be provided with a plurality of openings with different hole sizes. In addition, a position adjustment element is to be provided to control and direct the shredded food pieces to fall on different areas of the sieve.

The mesh holes in the sieve are dimensioned such that shredded food pieces is forced through different mesh holes at different positions of the spoiler and the food shredding element. The crux of the invention is the combination of spoiler and the moveable thereby height adjustable food shredding element and the sieve hole size that enables differences in pulp in the juice. The operation is quite easy, simple and convenient.

The pulp content adjustment mechanism disclosed in US 2013/0312623A1 is complex and more number of adjustment positions are needed. The present invention provides an easy and simple mechanism for the user to adjust the pulp content of the juice. The user can decide whether the juice should be clear or pulpy by appropriately switching the spoiler setting.

In order to adjust the pulp content in the juicer, it is essential that
a) there is a clear juice position e.g., position one for consumers who prefer clear juice
b) there is a cloudy juice position e.g., position two for consumers who prefer cloudy juice
c) there is a clear difference between position one and position two
d) the pulp content does not get too much
e) there are not too big fibers in the juice

The disclosed solution meets all the above mentioned essential aspects. The disclosed solution is very precise in pulp adjustment: clear juice in position one and nice cloudy juice in position two. The disclosed solution provides precise clear juice and cloudy juice settings that could satisfy many consumers. Further, it is easy to clean the centrifugal bowl.

The solution disclosed in US2013/0312623A1 has the following disadvantages:
a) number of adjustment positions are more (3 steps)
b) number of operations required are more
c) threshold of pulp/fiber content is high and hence results in juice that has high pulp/fiber content in all the positions and relatively too much pulp/fiber content in the open hole position
d) no clear juice can be experienced
e) complex design and it is difficult to clean

The difference between the adjustment steps 1, 2, and 3 is small in the prior art solution disclosed in US2013/0312623A1 and the juice produced in each of these steps have relatively high pulp/fiber content. The difference between the adjustment steps is ineffective because no clear juice can be produced. On the other hand, the present invention provides precise adjustment for clear juice and cloudy juice. The adjustability function is superior and results in better functional performance with regard to the pulp/fiber content threshold in the juice.

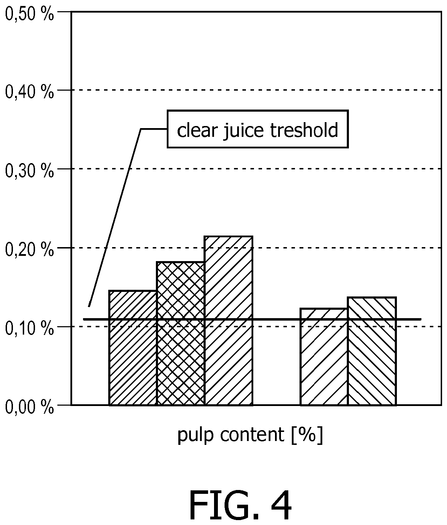

Referring now to Fig. 4, an experiment was conducted to test the functional performance of the disclosed solution with regard to the pulp/fiber content threshold in the juice. Five different fruits namely carrot, apple, tomato, grapes and oranges were used for the experiment. The experimental results showed that there is clear difference in juices for setting one and setting two. The juice in setting one is clear. The juice in setting two has got more fibers, but tastes smooth as there are only fine fibers in the juice.

The present invention achieves precise adjustment and consumers can experience real clear juice with minimal pulp/fiber content. Further, the disclosed solution is easy to clean and no extra steps are needed. The present invention allows the customer to still experience clear juice in step 1 compared to the prior art solution.

In the prior art solution, all the settings have very similar taste and rather big chunks can pass the big holes (3 - 5mm) that can be opened by the prior art solution. On the other hand, with the present invention the size of the fibers is limited with the sieve hole diameter (0.4 - 1mm) and the juice tastes very smooth (like a smoothie). Further, the cleaning is more cumbersome with the prior art solution. There will be some pulp in the lower area of the sieve if the adjustable part is not removed.

The adjustment mechanism could be implemented as a ring associated with a lever that can be altered, turned, lifted between a first position and a second position. A simple turn operation can control the pulp content in the juice and produce clear juice or cloudy juice. There are only two positions namely first position and second position. Hence, the number of operations required are minimal.

The lever could be realized as a thread. Alternately, in other embodiments the adjustment mechanism could be implemented e.g., as bayonet catch. In some embodiments, the adjustment mechanism could be operated from outside of the device e.g., an electromagnetic mechanism.

Further as depicted in Fig. 2a, the spoiler could be arranged to be lifted vertically via vertical rails 204.

In operation, the ring associated with the lever in the first position directs the flow of the shredded pulp to pass through the plurality of mesh holes in the first portion having a first hole size. The first hole size could be dimensioned such that the hole size is relatively big. It is easy for the pulp content to pass through the plurality of mesh holes in the first portion. In cloudy juices, some of the solid matter of the food product, such as food fibers, is suspended in the juice to give the juice a more substantial texture. Some consumers may like to have 'bits' i.e., pulp, in their juice and therefore prefer cloudy juice. This provides a convenient means for the consumer to appropriately adjust the ring position and easily select cloudy juice.

In a still further operation, the ring associated with the lever in the second position directs the flow of the shredded food pulp to pass through the plurality of mesh holes in the second portion having a second hole size. The second hole size could be dimensioned such that the hole size is relatively small. The pulp content cannot easily pass through the plurality of mesh holes in the second portion. Some consumers may not like to have bits i.e., pulp in their juice. This provides a convenient means for the consumer to appropriately adjust the ring position and select clear juice option.

The first hole size could have a diameter in the range of 0.20 - 0.35 mm.

The second hole size could have a diameter in the range of 0.40 - 1.5 mm.

The sieve could be a frusto conical sieve, the upper sieve diameter being smaller than the lower sieve diameter.

The juicer comprises a juice collector cooperating with the sieve such that juice passing through the plurality of mesh holes with a first hole size or through the plurality of mesh holes with a second hole size is collected in the juice collector. This enables easy collection of the juice.

In some embodiments, the plurality of mesh holes disposed on the first portion and the second portion could be configured such that the diameter of the first hole size is different for different mesh holes and the diameter of the second hole size is different for different mesh holes.

The sieve could be provided with mesh holes in the first portion wherein different mesh holes have different first hole size e.g., some mesh holes of 0.22 mm, some mesh holes of 0.28 mm, and some mesh holes of 0.54 mm etc. Similarly, the sieve could be provided with mesh holes in the second portion wherein different mesh holes have different second hole size e.g., some mesh holes of 0.45 mm, some mesh holes of 0.85 mm and some holes of 1.35 mm. This could allow greater control over the pulp content in the cloudy juice/clear juice to be produced by the juicer.

In summary, the invention discloses a mechanism to direct the flow of the shredded food pieces to specific sections of the sieve. This is achieved by adjusting the position of the spoiler and the food shredding element relative to each other. It is to be noted that adjusting the position of the spoiler is one way of implementing the invention. Other alternatives that do not fall under the scope of the claims such as adjusting the shape of the spoiler and the deflection angle could also be adapted (e.g., a flexible spoiler similar to an retractor adjustment mechanism of an electromagnetic unit). Yet another alternative that does not fall under the scope of the claims could be to open parts of the spoiler (e.g. overlapping elements).

While the subject matter has been illustrated in detail in the drawings and foregoing description, such illustration and description are to be considered illustrative or exemplary and not restrictive; the subject matter is not limited to the disclosed embodiments. Other variations to the disclosed embodiments can be understood and effected by those skilled in the art within the scope of the appended claims. Use of the verb "comprise" and its conjugates does not exclude the presence of elements other than those stated in a claim or in the description. Use of the indefinite article "a" or "an" preceding an element or step does not exclude the presence of a plurality of such elements or steps. The figures and description are to be regarded as illustrative only and do not limit the subject matter. Any reference sign in the claims should not be construed as limiting the scope.

## Claims

1. A juicer (100) comprising:
- a centrifugal bowl (102) having a food shredding element (130) cooperating with a sieve (132);
- a sieve coupler (140) associated with a spoiler (140b) and coupled to the centrifugal bowl (102; and
- an adjustment mechanism that is implemented as the sieve coupler (140) associated with the spoiler,
**characterized in that**
the sieve (132) is split into a first portion (160) having a plurality of mesh holes with a first hole size (160a) and a second portion (170) having a plurality of mesh holes with a second hole size (170a), and
the adjustment mechanism is configured such that the height of the spoiler (140b) and the food shredding element (130) are adjustable relative to each other to direct a flow of shredded food pulp to pass through the first portion (160) having a plurality of mesh holes with a first hole size (160a) or through the second portion (170) having a plurality of mesh holes with a second hole size (170a).

2. The juicer (100) as claimed in claim 1, wherein the adjustment mechanism is a ring associated with a lever that can be altered, turned or lifted between a first position and a second position.

3. The juicer (100) as claimed in claim 1 or 2, wherein the spoiler (140b) is adjustable by rotation along a thread or lifted vertically along rails (204).

4. The juicer (100) as claimed in claim 2, wherein, in operation, the ring associated with the lever in the first position directs the flow of the shredded food pulp to pass through the plurality of mesh holes in the first portion (160) having a first hole size (160a).

5. The juicer (100) as claimed in claim 2, wherein, in operation, the ring associated with the lever in the second position directs the flow of the shredded food pulp to pass through the plurality of mesh holes in the second portion (170) having a second hole size (170a).

6. The juicer (100) as claimed in any of the claims 1 - 5, wherein the first hole size (160a) has a diameter in the range of 0.20 - 0.35 mm.

7. The juicer (100) as claimed in any of the claims 1 - 5, wherein the second hole size (170a) has a diameter in the range of 0.40 - 1.5 mm.

8. The juicer (100) as claimed in any of the claims 1 - 7, wherein the sieve (132) is a frusto conical sieve, the upper sieve diameter being smaller than the lower sieve diameter.

9. The juicer (100) as claimed in any of the claims 1 - 8, further comprising:
- a juice collector (111) cooperating with the sieve (132) such that juice passing through the plurality of mesh holes with a first hole size or through the plurality of mesh holes with a second hole size is collected in the juice collector.

10. The juicer (100) as claimed in any of the claims 1 - 9, wherein the plurality of mesh holes disposed on the first portion (160) and the second portion (170) are such that the diameter of the first hole size (160a) is different for different mesh holes and the diameter of the second hole size (170a) is different for different mesh holes.

## Patentansprüche

1. Entsafter (100), umfassend:
- eine Zentrifugalschale (102) mit einem Lebensmittelzerkleinerungselement (130), das mit einem Sieb (132) zusammenarbeitet;
- eine Siebkupplung (140), die einem Spoiler (140b) zugeordnet und mit der Zentrifugalschale (102) gekoppelt ist; und
- einen Einstellmechanismus, der als die dem Spoiler zugeordnete Siebkupplung (140) implementiert ist,
**dadurch gekennzeichnet, dass**
das Sieb (132) in einen ersten Abschnitt (160) mit einer Vielzahl von Maschenlöchern mit einer ersten Lochgröße (160a) und einen zweiten Abschnitt (170) mit einer Vielzahl von Maschenlöchern mit einer zweiten Lochgröße (170a) aufgeteilt ist, und
der Einstellmechanismus so konfiguriert ist, dass die Höhe des Spoilers (140b) und des Lebensmittelzerkleinerungselements (130) relativ zueinander einstellbar sind, um einen Fluss von zerkleinertem Lebensmittelzellstoff so zu führen, dass er durch den ersten Abschnitt (160) mit einer Vielzahl von Maschenlöchern mit einer ersten Lochgröße (160a) oder durch den zweiten Abschnitt (170) mit einer Vielzahl von Maschenlöchern mit einer zweiten Lochgröße (170a) durchlauft.

2. Entsafter (100) nach Anspruch 1, wobei der Einstellmechanismus ein Ring ist, der einem Hebel zugeordnet ist, der zwischen einer ersten Position und einer zweiten Position verändert, gedreht oder angehoben werden kann.

3. Entsafter (100) nach Anspruch 1 oder 2, wobei der Spoiler (140b) durch Drehen entlang eines Gewindes einstellbar oder vertikal entlang Schienen (204) angehoben ist.

4. Entsafter (100) nach Anspruch 2, wobei im Betrieb der dem Hebel in der ersten Position zugeordnete Ring den Fluss des zerkleinerten Lebensmittelzellstoffs führt, um durch die Vielzahl von Maschenlöchern in dem ersten Abschnitt (160) mit einer ersten Lochgröße (160a) durchzulaufen.

5. Entsafter (100) nach Anspruch 2, wobei im Betrieb der dem Hebel in der zweiten Position zugeordnete Ring den Fluss des zerkleinerten Lebensmittelzellstoffs führt, um durch die Vielzahl von Maschenlöchern in dem zweiten Abschnitt (170) mit einer zweiten Lochgröße (170a) durchzulaufen.

6. Entsafter (100) nach einem der Ansprüche 1 bis 5, wobei die erste Lochgröße (160a) einen Durchmesser im Bereich von 0,20 bis 0,35 mm aufweist.

7. Entsafter (100) nach einem der Ansprüche 1 bis 5, wobei die zweite Lochgröße (170a) einen Durchmesser im Bereich von 0,40 bis 1,5 mm aufweist.

8. Entsafter (100) nach einem der Ansprüche 1 bis 7, wobei das Sieb (132) ein kegelstumpfförmiges Sieb ist, wobei der obere Siebdurchmesser kleiner als der untere Siebdurchmesser ist.

9. Entsafter (100) nach einem der Ansprüche 1 bis 8, ferner umfassend:
- ein Saftsammler (111), der mit dem Sieb (132) zusammenarbeitet, so dass Saft, der durch die Vielzahl von Maschenlöchern mit einer ersten Lochgröße oder durch die Vielzahl von Maschenlöchern mit einer zweiten Lochgröße durchlauft, in dem Saftsammler gesammelt wird.

10. Entsafter (100) nach einem der Ansprüche 1 bis 9, wobei die Vielzahl von Maschenlöchern, die an dem ersten Abschnitt (160) und dem zweiten Abschnitt (170) angeordnet sind, so sind, dass der Durchmesser der ersten Lochgröße (160a) für verschiedene Maschenlöcher unterschiedlich ist, und der Durchmesser der zweiten Lochgröße (170a) für verschiedene Maschenlöcher unterschiedlich ist.

## Revendications

1. Centrifugeuse (100) comprenant:
- une cuve centrifuge (102) ayant un élément de déchiquetage d'aliments (130) coopérant avec un tamis (132) ;
- un coupleur de tamis (140) associé à un déflecteur (140b) et couplé à la cuve centrifuge (102); et
- un mécanisme de réglage qui est mis en œuvre comme le coupleur de tamis (140) est associé au déflecteur,
**caractérisé en ce que**
le tamis (132) est divisé en une première partie (160) ayant une pluralité de trous de maille avec une première taille de trou (160a) et une seconde partie (170) ayant une pluralité de trous de maille avec une seconde taille de trou (170a), et
le mécanisme de réglage est configuré de telle sorte que la hauteur du déflecteur (140b) et la hauteur de l'élément de déchiquetage d'aliments (130) soient réglables l'une par rapport à l'autre pour diriger un écoulement de pulpe alimentaire déchiquetée afin qu'il passe à travers la première partie (160) ayant une pluralité de trous de maille avec une première taille de trou (160a) ou à travers la seconde partie (170) ayant une pluralité de trous de maille avec une seconde taille de trou (170a).

2. Centrifugeuse (100) selon la revendication 1, dans lequel le mécanisme de réglage est un anneau associé à un levier qui peut être modifié, tourné ou soulevé entre une première position et une seconde position.

3. Centrifugeuse (100) selon la revendication 1 ou 2, dans lequel le déflecteur (140b) est réglable par rotation le long d'un filetage ou soulevé verticalement le long des rails (204).

4. Centrifugeuse (100) selon la revendication 2, dans lequel, en fonctionnement, l'anneau associé au levier dans la première position dirige l'écoulement de la pulpe alimentaire déchiquetée afin qu'il passe à travers la pluralité de trous de maille dans la première partie (160) ayant une première taille de trou (160a) .

5. Centrifugeuse (100) selon la revendication 2, dans lequel, en fonctionnement, l'anneau associé au levier dans la seconde position dirige l'écoulement de la pulpe alimentaire déchiquetée afin qu'il passe à travers la pluralité de trous de maille dans la seconde partie (170) ayant une seconde taille de trou (170a).

6. Centrifugeuse (100) selon l'une quelconque des revendications 1 à 5, dans lequel la première taille de trou (160a) a un diamètre dans la plage de 0,20 à 0,35 mm.

7. Centrifugeuse (100) selon l'une quelconque des revendications 1 à 5, dans lequel la seconde taille de trou (170a) a un diamètre dans la plage de 0,40 à 1,5 mm.

8. Centrifugeuse (100) selon l'une quelconque des revendications 1 à 7, dans lequel le tamis (132) est un tamis tronconique, le diamètre du tamis supérieur étant inférieur au diamètre du tamis inférieur.

9. Centrifugeuse (100) selon l'une quelconque des revendications 1 à 8, comprenant en outre:
- un collecteur de jus (111) coopérant avec le tamis (132) de telle sorte que le jus passant à travers la pluralité de trous de maille avec une première taille de trou ou à travers la pluralité de trous de maille avec une seconde taille de trou est collecté dans le collecteur de jus.

10. Centrifugeuse (100) selon l'une quelconque des revendications 1 à 9, dans lequel la pluralité de trous de maille disposés sur la première partie (160) et la seconde partie (170) sont tels que le diamètre de la première taille de trou (160a) est différent pour différents trous de maille et le diamètre de la seconde taille de trou (170a) est différent pour différents trous de maille.
